# EUROPÄISCHE PATENTSCHRIFT

(11) **EP 0 717 921 B1**
(45) Veröffentlichungstag und Bekanntmachung des Hinweises auf die Patenterteilung: **25.08.1999**
(21) Anmeldenummer: 94120345.7
(22) Anmeldetag: 21.12.1994
(51) Int. Cl.: A01D 34/73

(54) **Kreiselmäher und Messerwechsel-Werkzeug**
Rotary mower and tool for the change of blades
Faucheuse rotative et outil pour l'échange des lames

(43) Veröffentlichungstag der Anmeldung: 26.06.1996
(73) Patentinhaber: Kverneland Geldrop B.V., 5660 AA Geldrop (NL)
(72) Erfinder: Van Der Walle, Jacobus Izaak, NL-5674 PT Nuenen (NL); Looymans, Martinus Franciscus Theodorus, NL-5674 PS Nuenen (NL)
(74) Vertreter: Grünecker, Kinkeldey, Stockmair & Schwanhäusser Anwaltssozietät

(56) Entgegenhaltungen:
- DE-A- 1 804 313
- DE-A- 3 130 936
- FR-A- 1 440 415
- FR-A- 2 201 821
- FR-A- 2 517 927
- NL-A- 8 101 567
- NL-A- 8 602 608
- US-A- 3 905 182

## Beschreibung

Die Erfindung betrifft einen Kreiselmäher gemäß dem Oberbegriff des Patentanspruchs 1 sowie ein Werkzeug gemäß dem unabhängigen Anspruch 2.

Die Messer von Kreiselmähern sind Verschleißteile, die bei Beschädigung oder Abnutzung zum Nachschärfen oder Auswechseln abgenommen werden. Da dies durchaus auch beim Arbeiten auf dem Feld erforderlich sein kann, sind möglichst einfache Manipulationen beim Messerwechseln wichtig.

Bei einem durch Vorbenutzung in der Praxis bekannten Kreiselmäher sind konstruktiv keine Maßnahmen für einen Messerwechsel vorgesehen. Vielmehr wird für diesen Zweck ein spezielles Werkzeug benutzt, das einen gabelförmigen Spreizhebel am Ende eines Schaftes aufweist, wobei der gabelförmige Spreizhebel in seiner Form auf die Ausbildung des Drehlagers am Messerträger abgestimmt ist. Bei stillstehendem Kreiselmäher-Mähwerkzeug wird der gabelförmige Spreizhebel von unten unter den Rand des Tellers eingesteckt und am Drehlager vorbeigeschoben und auf dem Messerträger abgestützt. Durch Hochziehen des Schaftes werden der Teller und der Messerträger voneinander weggespreizt. Das Messer läßt sich innerhalb des durch das Spreizen geschaffenen Raums vom Drehlager abheben und entnehmen. Beim Einsetzen eines geschärften oder neuen Messers wird in umgekehrter Reihenfolge vorgegangen. Diese Hanhabung ist mühsam und verletzungsträchtig, da der gabelförmige Spreizhebel leicht unrichtig angesetzt wird und abrutschen kann. Außerdem muß das Werkzeug mit beträchtlicher Kraft gekippt gehalten werden, während das Messer abgehoben oder aufgesetzt wird.

Aus FR-A-1 440 415 ist ein Kreiselmäher mit wenigstens einem Mähwerkzeug bekannt, bei dem sich der Teller und der Messerträger mittels eines Werkzeuges zum Messerwechsel voneinander wegspreizen lassen. Im Teller sind in Umfangsrichtung beiderseits des Drehlagers des Messers zwei Bohrungen vorgesehen, durch die Druckstifte an den Zinkenenden des gabelförmig ausgebildeten Werkzeugs einführbar sind, wenn das Werkzeug mit einem Maul unter den außenliegenden Rand des Tellers greift. Durch Hochkippen des Handgriffs des Werkzeugs drücken die Druckstifte auf die Oberseite des Messerträgers, bis das Drehlager des Messers frei wird und sich das Messer abnehmen läßt. Das Werkzeug ist relativ aufwendig. Die Handhabung ist mühsam, weil das Werkzeug unter Spannung gehalten werden muß, bis das Messer gewechselt ist. Dabei muß das Messer zwischen den Gabelzinken herausgeführt und das neue Messer ebenso eingeführt werden.

Der Erfindung liegt die Aufgabe zugrunde, einen Kreiselmäher der eingangs genannten Art und ein einfaches Werkzeug anzugeben, mit denen eine sichere und bequeme Manipulation bei einem Messerwechsel möglich ist.

Die gestellte Aufgabe wird mit den Merkmalen des Patentanspruchs 1 und/oder den Merkmalen des selbständigen Anspruchs 2 gelöst.

Der Kreiselmäher ist herstellerseitig bereits für eine vereinfachte Manipulation beim Messerwechsel konzipiert. Es braucht nicht mehr von unten unter den Tellerrand eingegriffen zu werden, sondern das Werkzeug läßt sich bequem von oben durch die Einstecköffnung einführen und handhaben, wobei es beim Messerwechsel sicher an der Abstützfläche abgestützt wird. Besonders bequem ist, daß durch die Einstecköffnung und die an sie angrenzende Abstützfläche baulich einfache Voraussetzungen dafür geschaffen werden, daß das Werkzeug in der Stellung, in der der Teller und der Messerträger voneinander abgespreizt sind, losgelassen werden kann und die Spreizlage selbsttätig aufrechterhält. Das Messer läßt sich dann bequem abnehmen bzw. wechseln. Dabei ermöglicht die Form der Einstecköffnung das leichte Einstecken und dann das Abstützen des Quervorsprungs am Teller. Bei länglicher Einstecköffnung wird der Quervorsprung nach dem Einführen um ca. 90° gedreht, damit er an der Abstützöffnung angreift. Bei der mit einem großen und einem kleinen Öffnungsteil gebildeten Einstecköffnung wird der Quervorsprung nach dem Einführen unter den kleinen Öffnungsteil verlagert, um auf diese Weise an der Abstützfläche anzugreifen. Beim Manipulieren mit dem Werkzeug wird das freie Ende des Spreizhebels sicher geführt und abgestützt. Wird das freie Ende des Spreizhebels eben ausgebildet, dann ergibt sich zwischen der ebenen Abstützfläche und dem freien Ende ein Verrastungseffekt, der die stabile Arbeitsposition des Werkzeuges auch dann aufrechterhält, wenn das Werkzeug losgelassen wird.

Das Werkzeug ist einfach und kostengünstig herstellbar und läßt sich bequem handhaben, da es nur von oben in den Teller eingeführt zu werden braucht und sich beim Auseinanderspreizen mit dem Quervorsprung abstützt. Durch die Bemessung des Werkzeugs wird der notwendige Abstand zwischen dem Messerträger und dem Teller hergestellt, um das Messer problemlos ein- und ausbauen zu können. Außerdem läßt sich eine Verrastungseffekt erzielen, durch den das Werkzeug losgelassen werden kann, ohne seine Lage selbsttätig zu verändern. Es sind dann beiden Hände frei, das Messer abzunehmen und eine neues Messer aufzustecken. Das Werkzeug kann vom Hersteller des Kreiselmähers, gegebenenfalls zusammen mit Reservemessern, geliefert werden. Es ist aber auch denkbar, das Werkzeug als gesonderten Zubehörteil herzustellen und zu liefern, der dann zu entsprechend vorbereiteten Kreiselmähern paßt.Bereits im Betrieb gewesene oder ausgelieferte Kreiselmäher können nachträglich im Hinblick auf eine einfache Handhabung beim Messerwechsel des Werkzeuges dadurch modifiziert werden, daß in den Teller der Anzahl der Messer entsprechend viele Einstecköffnungen eingeformt werden.

Gemäß Anspruch 3 läßt sich das Werkzeug mit günstiger Hebelwirkung einsetzen. Da die Einstecköffnung näher an der Kreiselachse liegt als das Drehlager, wird das Entnehmen und Aufstecken des Messers durch das eingesteckte Werkzeug nicht behindert.

Baulich einfach ist die Ausführungsform gemäß Anspruch 4.

Gemäß Anspruch 5 gleitet der Quervorsprung durch die unterschiedlichen Neigungen der inneren und äußeren Wandbereiche beim Kippen des Werkzeuges unter den inneren Wandbereich, während das freie Ende des Spreizhebels auf dem Messerträger in Richtung zum Drehlager gleitet. Es läßt sich eine stabile Lage des Werkzeuges erreichen, in der dieses selbsttätig verriegelt ist und den Messerträger und den Teller voneinander abgespreizt hält. Das Werkzeug kann dann losgelassen werden und verbleibt in dieser stabilen Lage. Beim Kippen des Werkzeugs wird eine Art Servoeffekt erzeugt, weil der Quervorsprung entlang des abfallenden Wandbereiches in Kipprichtung gleitet, während gleichzeitig das freie Ende des Spreizhebels in der Gegenrichtung verlagert wird. Ferner stellt sich ein spürbarer Rasteffekt ein, wenn das Werkzeug seine stabile Verrastungsposition erreicht hat. Die Bedienungsperson weiß dann, daß das Werkzeug losgelassen werden kann und sich das Messer wechseln läßt.

Gemäß Anspruch 6 sichert der weitere Wandbereich des Tellers das aufgesteckte Messer in der Betriebslage gegen unbeabsichtigtes selbsttätiges Herabfallen vom Drehlager.

Gemäß Anspruch 7 sichert das Spiel zwischen dem Spreizhebel und der Einstecköffnung den zuverlässigen Angriff des Quervorsprungs an der Abstützfläche, und werden das leichte Einführen des Spreizhebels mit dem Quervorsprung und das verschleißarme Kippen des Werkzeugs in der Einstecköffnung ermöglicht.

Die Ausführungsform des Werkzeugs gemäß Anspruch 8 ist einfach herstellbar und kostengünstig.

Gemäß Anspruch 9 ergibt sich durch den Knick eine bequeme Handhabung mit günstigem Angriffshebel. Außerdem wird optisch daraufhingewiesen, welches Ende des Werkzeugs in die Einstecköffnung eingeführt werden ermöglicht muß.

Gemäß Anspruch 10 wird der Spreizhebel in einer Drehlage durch die Einstecköffnung eingeführt und dann verdreht, bis die beiden Stiftenden an der Abstützfläche angreifen, die an die Einstecköffnung angrenzt.

Eine ergonomisch günstige Ausführungsform geht aus Anspruch 11 hervor.

Für ein Langloch mit einer lichten Länge von ca. 30 mm und einer lichten Weite von ca. 18 mm ist die Ausführungsform des Werkzeugs gemäß Anspruch 12 zweckmäßig.

Das Werkzeug besteht zweckmäßigerweise aus Vollmaterial, z.B. Stahl. Der Stift ist in eine Bohrung des Spreizhebels eingepreßt oder eingeschweißt. Es ist aber auch denkbar, den Quervorsprung einstückig am Spreizhebel anzuformen, z.B. durch Quetschen oder eine ähnliche Kalt- oder Warmverformung. Der Schaft des Werkzeugs kann lang bleiben. Es ist aber auch denkbar, einen Handgriff aufzustecken oder einen Belag aufzubringen, der die Manipulation mit dem Werkzeug unterstützt. Am freien Ende des Spreizhebels könnte eine Kappe aus gleitfähigem Material vorgesehen sein. Das freie Ende des Spreizhebels ist zweckmäßigerweise abgeflacht und im Randbereich gerundet. Es wäre aber auch denkbar, ein kugeliges freies Ende vorzusehen, oder ein teilzylindrisches freies Ende zu formen, wobei die Zylinderachse dann annähernd parallel zur Achse des Stiftes liegen sollte, der den Quervorsprung bildet.

Anhand der Zeichnung werden Ausführungsformen des Erfindungsgegenstandes erläutert. Es zeigen:
- Fig. 1: einen Teil eines Achsschnittes eines Mähwerkzeugs eines Kreiselmähers, bei einem Messerwechsel,
- Fig. 2: eine Seitenansicht eines Werkzeugs,
- Fig. 3: eine Stirnansicht des Werkzeugs von Fig. 2,
- Fig. 4: einen Teilschnitt (Achsschnitt) eines Details aus Fig. 1,
- Fig. 5: eine Draufsicht auf das Detail von Fig. 4, und
- Fig. 6 + 7: Detailvarianten zu Fig. 5.

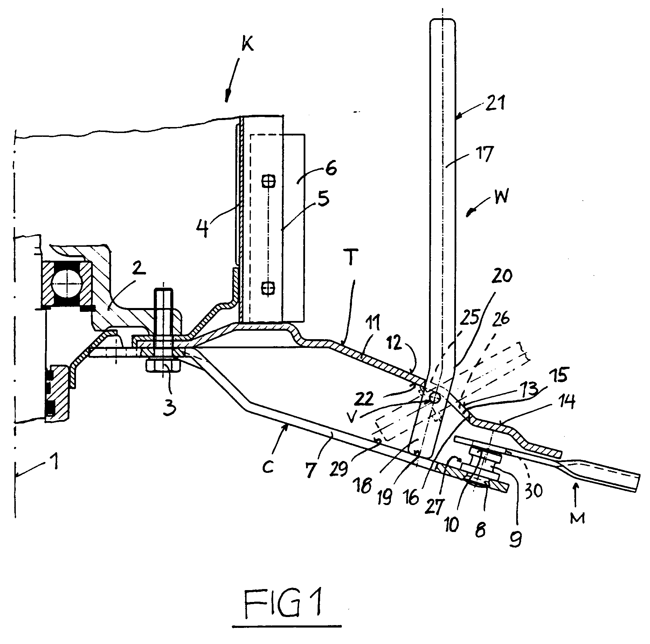

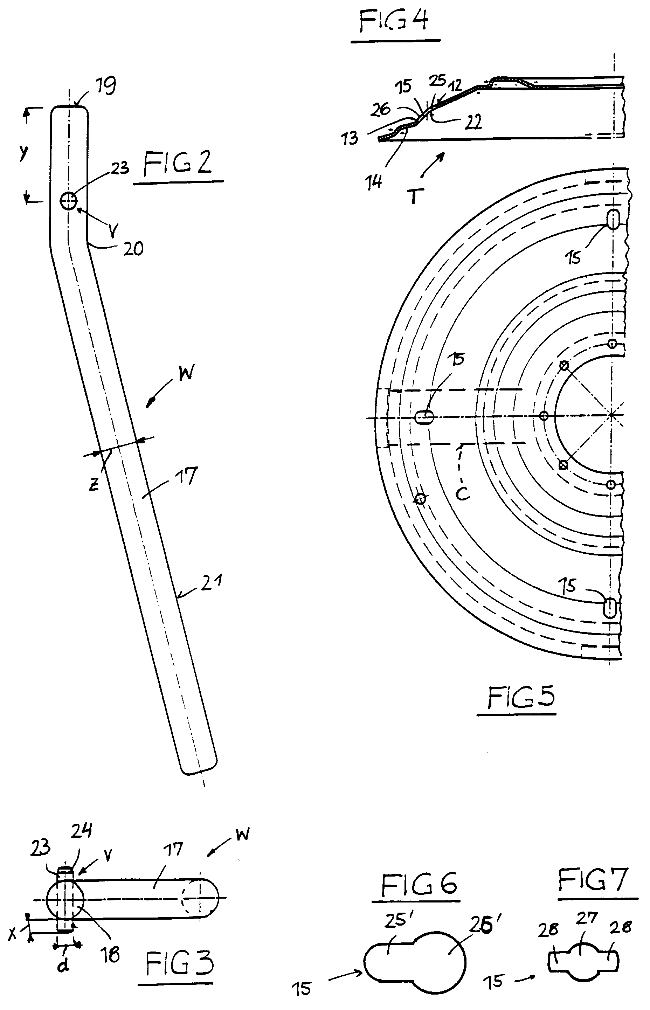

Von einem nicht näher dargestellten Kreiselmäher ist in Fig. 1 ein Teil eines Achsschnittes eines Mähwerkzeugs K erkennbar. Um eine Kreiselachse 1 ist eine Nabe 2 zur Drehung antreibbar gelagert, an der mit Befestigungsschrauben 3 ein oberseitiger Teller T mit kegelstumpfförmiger Gestalt und unterhalb des Tellers T wenigstens ein Messerträger C befestigt sind. Der Messerträger C kann als kegelstumpfförmige Scheibe oder mit einzelnen in Fig. 5 strichliert angdeuteten, speichenförmigen Armen ausgebildet sein. Von oben führt eine Trommel 4 bis zur Oberseite des Tellers T. An der Trommel 4 sind aufwärts- und längsverlaufende Stege 5 mit daran befestigten Abweiselementen 6 angeordnet.

Der Messerträger C, der beispielsweise ein speichenartiger, bandförmiger Metallteil 7 ist, trägt nahe seines äußeren Randes ein Drehlager 27 für ein Messer M. Das Drehlager 27 ist bei der gezeigten Ausführungsform ein im Messerträger C bei 8 vernieteter Bolzen mit einer Nut 9 und einer freien, ebenen Endfläche 10. Das Messer M weist eine Bohrung 30 auf, die von der Seite der Endfläche 10 her auf das Drehlager 27 aufschiebbar ist, bis schließlich das Messer M im Bereich der Nut 9 liegt. Im Betrieb wird das Messer M durch die Zentrifugalkraft in der Nut 9 gehalten und beim Auftreffen auf ein Hindernis entgegen der Drehrichtung wegschwenkbar.

Der Teller T weist eine Wand 11 auf, die in etwa gleichbleibende Wandstärke und in Bezug auf den Messerträger T unterschiedlich geneigte Wandbereiche besitzt. An einen inneren Wandbereich 12, der annähernd parallel zum Messerträger T verläuft, schließt sich ein stärker nach unten schräg geneigter äußerer Wandbereich 13 an, an den sich wiederum ein weiterer Wandbereich 14 anschließt, der erneut annähernd parallel zum Messerträger C bzw. parallel zur Endfläche 10 verläuft. Der Tellerrand liegt außerhalb des Drehlagers 27.

In Fig. 1 ist das Mähwerkzeug K in einer Stellung gezeigt, in der sich das Messer M auswechseln läßt. Der Teller T ist zu diesem Zweck vom Messerträger C weggespreizt, und zwar mit Hilfe eines Werkzeugs W zum Messerwechseln. Der Teller T ist mit seinem weiteren Wandbereich 14 so weit von der Endfläche 10 abgehoben, daß sich das Messer M leicht abnehmen oder einsetzen läßt. In der nicht gezeigten Betriebslage, in der das Werkzeug W entfernt ist, wird der Teller T aufgrund elastischer Rückstellkraft mit seinem weiteren Wandbereich 14 nahe an der Endfläche 10 gehalten oder sogar auf diese aufgedrückt.

Im Teller T sind (Fig. 5) mehrere Einstecköffnungen 15 für das Werkzeug W vorgesehen. Zweckmäßigerweise ist bei jedem Drehlager 27 eine solche Einstecköffnung 15 vorgesehen. Es ist aber auch denkbar, mehreren benachbarten Drehlagern nur eine einzige Einstecköffnung zuzuordnen.

Die Einstecköffnung 15 ist in den Fig. 1 und 5 ein Langloch, dessen Längsachse in etwa radial zur Kreiselachse 1 verläuft. Ein innerer Öffnungsteil 25 der Einstecköffnung 15 liegt im inneren Wandbereich 12, während eine äußerer Öffnungsteil 26 des Langloches im äußeren Wandbereich 13 liegt. Angrenzend an die Einstecköffnung ist an der Innenseite des Tellers T eine Abstützfläche 22 vorgesehen. Der Abstützfläche 22 gegenüberliegend ist an der Oberseite des Messerträgers C ebenfalls eine Abstützfläche 29 vorgesehen.

Das Werkzeug W (s. auch die Fig. 2 und 3) weist einen langgestreckten Schaft 17 auf, der einen Handgriff 21 definiert, und einen den Schaft 17 verlängernden Spreizhebel 18, der an einem freien Ende 19 ausläuft. Bei der gezeigten Ausführungsform ist der Spreizhebel 18 gegenüber dem Schaft 17 mit einem stumpfen Winkel abgewinkelt, und zwar im Bereich 20. Am Spreizhebel 18 ist ein Quervorsprung V vorgesehen, der sich in einem Abstand vom freien Ende 19 befindet. Der Abstand ist so gewählt, daß er den Abstand zwischen dem weiteren Wandbereich 14 des Tellers T und der Endfläche 10 des Drehlagers beim Messerwechsel bestimmt und ein leichtes Wechseln des Messers M ermöglicht.

Gemäß Fig. 2 und 3 ist der Quervorsprung V ein Stift 23, der annähernd senkrecht zur Ebene, die vom Schaft 17 und dem abgewinkelten Spreizhebel 18 definiert ist, durch den Spreizhebel 18 gesteckt ist, derart, daß er mit beiden Enden über den Spreizhebel 18 vorsteht. Zum leichteren Eintreiben des Stiftes 23 kann dieser mit einem kegeligen Ende 24 versehen sein.

Der Schaft 17 hat wie der Spreizhebel 18 bei einer Ausbildung aus Vollmaterial (Stahl) zweckmäßigerweise einen Außendurchmesser z von ca. 14 mm. Der Stift 23 hat einen Durchmesser d von ca. 6 mm und eine Länge von ca. 24 mm, so daß er beidendig um ein Maß x von ca. 5 mm über den Spreizhebel 18 übersteht. Der Abstand y zwischen dem freien Ende 19 und dem Quervorsprung V beträgt ca. 32 mm. Das Langloch im Teller T hat eine Länge von ca. 30 mm und eine Weite von ca. 18 mm. Das außenliegende Ende des Langloches ist annähernd so weit von der Kreiselachse 1 beabstandet wie das Drehlager 27. Die mit 16 bezeichneten Langlochwände verlaufen annähernd parallel zur Kreiselachse 1.

Das Werkzeug gemäß den Fig. 2 und 3 wird zunächst (Fig. 1, strichliert angedeutet) so in die Einstecköffnung eingeführt, daß der ganze Spreizhebel 18 und auch der Quervorsprung V durch die Einstecköffnung 15 hindurchtreten. Dabei ist das Werkzeug W so gedreht, daß die Achse des Stiftes 23 in etwa mit der Längsachse des Langloches übereinstimmt. Dann wird das Werkzeug W um ca. 90° gedreht und in Fig. 1 entgegen dem Uhrzeigersinn gekippt. Der Quervorsprung V greift an der Abstützfläche 22 an, während das freie Ende 19 auf die Abstützfläche 29 des Messerträgers C aufgesetzt wird. Beim weiteren Kippen des Werkzeuges W entgegen dem Uhrzeigersinn gleitet der Quervorsprung V an der Abstützfläche 22 und entlang des äußeren Wandbereiches 13 bis auf den inneren Wandbereich 12, während gleichzeitig das freie Ende 19 bis in die in Fig.1 gezeigte Position verlagert wird, in der es bündig auf der Abstützfläche 29 aufsitzt. Das Werkzeug W hat dann eine stabile Lage, d.h., es hält die in ausgezogenen Linie gezeichnete Stellung auch ein, wenn der Schaft 17 losgelassen wird. Bei der vorerwähnten Kippbewegung wird der Teller T relativ vom Messerträger T abgespreizt, so daß sich das Messer M problemlos entnehmen läßt. Ist das Messer M gewechselt, dann wird das Werkzeug W im Uhrzeigersinn gekippt, bis wieder die in Fig. 1 strichliert gezeichnete Position erreicht wird. Nach einer Drehung des Werkzeuges um 90° läßt sich der Spreizhebel mit dem Quervorsprung aus der Einstecköffnung 15 herausziehen. Das Mähwerkzeug K ist dann wieder betriebsbereit.

Der Spreizhebel 18 könnte auch eine geradlinige Verlängerung des Schaftes 17 ohne Knick sein. Anstelle eines Stiftes 23 als Quervorsprung könnten auch durch kalt- oder warmverformendes Quetschen des Spreizhebels 18 ohrenartige Quervorsprünge angeformt sein. Der Spreizhebel 18 ist wie der Schaft 17 in den dargestellten Ausführungsformen mit rundem Außenquerschnitt gezeigt. Es ist aber auch jede andere Querschnittsform denkbar. Ferner könnte das Werkzeug hohl ausgebildet sein. Auf dem freien Ende 19 könnte auch ein gleitfreudiger Belag oder eine Kappe angeordnet werden.

Die Einstecköffnung 15 muß nicht notwendigerweise ein Langloch sein, wie dies in den Fig. 5 und 1 angedeutet ist. Es wäre auch denkbar, gemäß Fig. 6 oder 7 eine andere Öffnungsform zu wählen, die einerseits das leichte Einstecken des Werkzeugs W und andererseits das sichere Abstützen des Quervorsprungs V ermöglicht. In Fig. 6 besteht die Einstecköffnung 15 aus einem großen Öffnungsteil 26', der mit einem kleinen Öffnungsteil 25' verbunden ist, unterhalb dessen die Quervorsprünge V sicher abgestützt werden. In Fig. 7 hat die Einstecköffnung 15 einen Querschnitt, der dem Querschnitt des Spreizhebels 18 mit dem Stift 23 annähernd entspricht, mit einem vorbestimmten Übermaß. Für die Einstecköffnung 15 gemäß Fig. 6 könnte der Quervorsprung auch ein Ringkragen am Spreizhebel 18 sein.

## Patentansprüche

1. Kreiselmäher, mit wenigstens einem Mähwerkzeug (K), das um eine zum Boden gerichtete Kreiselachse (1) zur Drehung antreibbar ist und wenigstens einen Messerträger (C) und einen den Messerträger (C) von oben überdeckenden Teller (T) aufweist, mit wenigstens einem am Messerträger angeordneten Drehlager (8) für ein Messer (M), das abnehmbar auf das Drehlager aufgesteckt ist, wobei der Teller und der Messerträger in etwa in Richtung der Kreiselachse gegen eine elastische Rückstellkraft relativ voneinander wegdrückbar sind, **dadurch gekennzeichnet,** daß im Teller (T) innerhalb des Tellerrandes wenigstens eine zum darunterliegenden Messerträger (C) einen Zugang schaffende Einstecköffnung (15) für ein einen Quervorsprung (V) aufweisendes Messerwechsel-Werkzeug (W) vorgesehen ist, an die an der Unterseite des Tellers (T) eine Abstützfläche (22) für den Quervorsprung (V) angrenzt, daß die Einstecköffnung (15) eine längliche Form mit einer gegenüber der Längsweite schmaleren Querweite oder einen großen Öffnungsteil (26', 27) mit wenigstens einem damit verbundenen kleinen Öffnungsteil (25', 28) aufweist, und daß auf der Oberseite des Messerträgers (C) eine im wesentlichen ebene Abstützfläche (29) für das freie Ende (19) des durch die Einstecköffnung (15) eingeführten Werkzeugs (W) vorgesehen ist.

2. Werkzeug (W), das zum Wechseln von Messern (M) von Kreiselmähern gemäß Anspruch 1 bestimmt ist, mit einem einen Handgriff (21) bildenden Schaft (17) und einem mit dem Schaft verbundenen Spreizhebel (18), der an einem das Messer (M) lagernden Messerträger (C) und an einem den Messerträger oben überdeckenden Teller (T) eines Kreiselmäher-Mähwerkzeugs (K) abstützbar ist, um den Messerträger und den Teller voneinander wegzuspreizen, **dadurch gekennzeichnet,** daß im Abstand vom freien Ende (19) des Spreizhebels (18) ein Quervorsprung (V) vorgesehen ist, mit dem das mit dem Spreizhebel (18) und dem Quervorsprung (V) durch eine Einstecköffnung (15) des Tellers (T) eingeführte Werkzeug (W) durch eine Kippbewegung in etwa um den Quervorsprung (V) am Teller (T) und auf dem Messerträger (C) abstützbar ist, und und daß der Abstand (Y) zwischen dem Quervorsprung (V) und dem freien Ende (19) des Spreizhebels (18) größer ist als der Arbeitsabstand zwischen dem Teller (T) und dem Messerträger (C) bei den Spreizhebel-Abstützflächen (22, 29).

3. Kreiselmäher nach Anspruch 1, **dadurch gekennzeichnet,** daß die Einstecköffnung (15) in etwa radial mit dem Drehlager (9) des Messers (M) fluchtet und näher zur Kreiselachse (1) liegt als das Drehlager (9).

4. Kreiselmäher nach Anspruch 1, **dadurch gekennzeichnet,** daß der Teller (T) kegelstumpfförmige Gestalt hat, und daß die Einstecköffnung (15) ein Langloch mit in der Wand des Tellers (T) annähernd parallel zur Kegelstumpf- und Kreiselachse (1) verlaufenden Langlochwänden (16) ist.

5. Kreiselmäher nach Anspruch 4, **dadurch gekennzeichnet,** daß das Langloch mit seiner Längsachse in etwa radial zur Kreiselachse (1) liegt und - bezogen auf die Kreiselachse (1) - einen inneren und einen äußeren Abschnitt (25, 26) aufweist, von denen der innere Abschnitt (25) in einem Wandbereich (12) liegt, der in etwa zum Messerträger (C) parallel ist, während der äußere Abschnitt (26) in einem nach außen schräg in Richtung zum Messerträger (C) abfallenden Wandbereich (13) liegt.

6. Kreiselmäher nach Anspruch 5, **dadurch gekennzeichnet,** daß das Drehlager (9) eine ebene obere Endfläche (10) aufweist, und daß der Teller (T) außen im Anschluß an den äußeren Wandbereich (13) einen weiteren Wandbereich (14) aufweist, der in etwa parallel zur Endfläche (10) verläuft.

7. Kreiselmäher nach Anspruch 4, **dadurch gekennzeichnet,** daß das Langloch für ein Werkzeug (W) mit einem Durchmesser von ca. 14 mm und einer Quervorsprungsweite von ca. 24 mm eine innere Weite von ca. 18 mm und eine innere Länge von ca. 30 mm aufweist.

8. Werkzeug nach Anspruch 2, **dadurch gekennzeichnet,** daß der Spreizhebel (18) als im Querschnitt runder oder profilierter, gegebenenfalls hoher, Zapfen ausgebildet ist.

9. Werkzeug nach Anspruch 2, **dadurch gekennzeichnet,** daß der Spreizhebel (18) eine gerade, gegenüber dem aus Vollmaterial mit rundem, ovalen oder profiliertem, gegebenenfalls bandartigen, Außenquerschnitt bestehenden Schaft (17) mit stumpfem Winkel abgewinkelte Verlängerung des Schafts (17) ist.

10. Werkzeug nach Anspruch 2, **dadurch gekennzeichnet,** daß der Quervorsprung (V) ein den Spreizhebel (18) durchsetzender, beidendig vorstehender Stift (23) mit einem kleineren Durchmesser (d) als der Außendurchmesser des Spreizhebels (18) ist.

11. Werkzeug nach Anspruch 10, **dadurch gekennzeichnet,** daß der Stift (23) in etwa senkrecht zur Ebene in den Spreizhebel (18) eingesetzt ist, die durch den Schaft (17) und den abgewinkelten Spreizhebel (18) definiert ist.

12. Werkzeug nach den Ansprüchen 10 und 11, **dadurch gekennzeichnet,** daß der Spreizhebel (18) einen Außendurchmesser von ca. 14 mm und eine Länge von ca. 47 mm besitzt, und daß der Stift (22) mit einem Durchmesser von ca. 6 mm in einem Abstand von ca. 33 mm vom freien Ende 19 angeordnet ist und beidseitig um ca. 5 mm über den Spreizhebel (18) vorsteht.

## Claims

1. Rotary mower with at least one cutting tool (K) which is actuatable for rotating around a rotary axis (1) which is directed towards the ground and has at least one blade holder (C) and a plate (T) covering the blade holder (C) from above, with at least one pivot bearing (8) arranged on the blade holder for a blade (M) which is detachably mounted on the pivot bearing, the plate and blade holder being able to be pushed relatively apart from one another in roughly the direction of the rotary axis against an elastic restoring force, **characterised in that** in the plate (T) there is provided within the plate edge at least one insertion opening (15), creating an access to the blade holder (C) lying thereunder, for a blade replacing tool (W) which has a transverse projection (V), onto which insertion opening a supporting surface (22) adjoins on the underside of the plate (T) for the transverse projection (V), in that the insertion opening (15) has an oblong shape with a narrower transverse width, relative to the longitudinal width, or a large opening part (26', 27) with at least one small opening part (25', 28) connected thereto, and in that on the upper side of the blade holder (C) there is provided an essentially flat supporting surface (29) for the free end (19) of the tool (W) introduced through the insertion opening (15).

2. Tool (W), which is intended according to claim 1 for changing the blades (M) of rotary mowers, with a shaft (17) forming a handle (21) and an expanding lever (18) which is connected to the shaft and which is supportable on a blade holder (C) mounting the blade (M) and on a plate (T) of a rotary mower cutting tool (K) covering the blade holder from above in order to spread the blade holder and the plate apart from one another, **characterised in that** at a spacing from the free end (19) of the expanding lever (18) there is provided a transverse projection (V) with which the tool (W), introduced by the expanding lever (18) and by the transverse projection (V) through an insertion opening (15) of the plate (T), is supportable on the plate (T) and the blade holder (C) by means of a tilting movement roughly around the transverse projection (V) and in that the spacing (Y) between the transverse projection (V) and the free end (19) of the expanding lever (18) is greater than the operating spacing between the plate (T) and the blade holder (C) in the expanding lever-supporting surfaces (22, 29).

3. Rotary mower according to claim 1, **characterised in that** the insertion opening (15) is aligned roughly radially to the pivot bearing (9) of the blade (M) and is situated closer to the rotary axis (1) than the pivot bearing (9).

4. Rotary mower according to claim 1, **characterised in that** the plate (T) has a truncated conical-shaped form and in that the insertion opening (15) is a slot with slot walls (16) extending in the wall of the plate (T) virtually parallel to the truncated cone- and rotary-axis (1).

5. Rotary mower according to claim 4, **characterised in that** the slot is situated with its longitudinal axis roughly radially to the rotary axis (1) - and with respect to the rotary axis (1) - has an inner and outer section (25, 26), the inner section (25) of which is situated in a wall area (12) which is roughly parallel to the blade holder (C) while the outer section (26) is situated in a wall area (13) inclined diagonally outwards in the direction of the blade holder (C).

6. Rotary mower according to claim 5, **characterised in that** the pivot bearing (9) has a flat upper end surface (10) and in that the plate (T) has a further wall area (14) which is connected on the outside to the exterior wall area (13) and which extends roughly parallel to the end surface (10).

7. Rotary mower according to claim 4, **characterised in that** the slot for a tool (W) with a diameter of circa 14 mm and a transverse projection width of circa 24 mm has an inner width of circa 18 mm and an inner length of circa 30 mm.

8. Tool according to claim 2, **characterised in that** the expanding lever (18) is designed as a peg which in cross-section is round or profiled, if necessary hollow. .

9. Tool according to claim 2, **characterised in that** relative to the shaft (17) consisting of solid material with a round, oval or profiled, if necessary belt-like outer cross-section, the expanding lever (18) is a straight extension of the shaft (17) offset at an obtuse angle.

10. Tool according to claim 2 **characterised in that** the transverse projection (V) is a pin (23), projecting at both ends and penetrating the expanding lever (18), with a smaller diameter (d) than the outer diameter of the expanding lever (18).

11. Tool according to claims 10, **characterised in that** the pin (23) is inserted into the expanding lever (18) roughly perpendicular to the plane which is defined by the shaft (17) and the angled expanding lever (18).

12. Tool according to claims 10 and 11, **characterised in that** the expanding lever (18) has an outer diameter of circa 14 mm and a length of circa 47 mm and in that the pin (22) with a diameter of circa 6 mm is arranged at a spacing of circa 33 mm from the free end (19) and projects on both sides by circa 5 mm past the expanding lever (18).

## Revendications

1. Faucheuse rotative, avec au moins un mécanisme faucheur (K) qui peut être entraîné en rotation autour d'un axe de rotation (1) orienté vers le sol et qui présente au moins un porte-couteau (C) et un plateau (T) recouvrant le porte-couteau (C) de dessus, avec au moins un palier de rotation (8) disposé au porte-couteau pour un couteau (M) qui est enclenché amoviblement sur le palier de rotation, où le plateau et le porte-couteau peuvent être poussés l'un relativement au loin de l'autre à peu près dans la direction de l'axe de rotation contre une force de rappel élastique, caractérisée en ce qu'il est prévu dans le plateau (T), à l'intérieur du bord de plateau, au moins une ouverture d'insertion (15) créant un accès au porte-couteau (C) situé en dessous pour un outil d'échange de couteau (W) présentant une saillie transversale (V), auquel est contigu, au côté inférieur du plateau (T), une face d'appui (22) pour la saillie transversale (V), en ce que l'ouverture d'insertion (15) a une forme allongée avec une largeur transversale plus étroite par rapport à la largeur longitudinale ou une grande partie d'ouverture (26', 27) avec au moins une petite partie d'ouverture (25', 28) reliée à celle-ci, et en ce qu'il est prévu sur le côté supérieur du porte-couteau (C) une face d'appui (29) sensiblement plane pour l'extrémité libre (19) de l'outil (W) inséré à travers l'ouverture d'insertion (15).

2. Outil (W) prévu pour l'échange de couteaux (M) de faucheuses rotatives selon la revendication 1, avec une tige (17) formant une poignée (21) et un levier d'écartement (18) relié a la tige, qui peut prendre appui sur un porte-couteau (C) logeant le couteau (M) et sur un plateau (T), recouvrant le porte-couteau en haut, d'un mécanisme faucheur (K) de faucheuse rotative, pour écarter le porte-couteau et le plateau l'un de l'autre, caractérisé en ce qu'il est prévu à une distance de l'extrémité libre (19) du levier d'écartement (18) une saillie transversale (V) par laquelle l'outil (W) inséré avec le levier d'écartement (18) et la saillie transversale (V) à travers une ouverture d'insertion (15) du plateau (T) peut prendre appui par un mouvement de basculement selon environ la saillie transversale (V) sur le plateau (T) et sur le porte-couteau (C), et en ce que l'écart (Y) entre la saillie transversale (V) et l'extrémité libre (19) du levier d'écartement (18) est plus grand que l'écart de travail entre le plateau (T) et le porte-couteau (C) dans les faces d'appui de levier d'écartement (22, 29).

3. Faucheuse rotative selon la revendication 1, caractérisée en ce que l'ouverture d'insertion (15) est alignée à peu près radialement avec le palier de rotation (9) du couteau (M) et est plus proche de l'axe de rotation (1) que le palier de rotation (9).

4. Faucheuse rotative selon la revendication 1, caractérisée en ce que le plateau (T) a une forme tronconique et en ce que l'ouverture d'insertion (15) est un trou oblong avec des parois de trou oblong (16) s'étendant dans la paroi du plateau (T) approximativement parallèlement à l'axe tronconique et de rotation (1).

5. Faucheuse rotative selon la revendication 4, caractérisée en ce que le trou oblong, avec son axe longitudinal, s'étend à peu près radialement à l'axe de rotation (1) et, par rapport à l'axe de rotation (1), présente un tronçon intérieur et extérieur (25, 26) dont le troncon intérieur (25) se situe dans une zone de paroi (12) qui est à peu près paralléle au porte-couteau (C), tandis que le tronçon extérieur (26) se situe dans une zone de paroi (13) descendant vers l'extérieur en biais en direction du porte-couteau (C).

6. Faucheuse rotative selon la revendication 5, caractérisée en ce que le palier de rotation (9) présente une face d'extrémité supérieure plane (10), et en ce que le plateau (T), à l'extérieur à la suite à la zone de paroi extérieure (13), présente une zone de paroi additionnelle (14) qui s'étend à peu près parallèlement à la face d'extrémité (10).

7. Faucheuse rotative selon la revendication 4, caractérisée en ce que le trou oblong pour un outil (W) d'un diamètre d'environ 14 mm et d'une largeur de saillie transversale d'environ 24 mm présente une largeur intérieure d'environ 18 mm et une longueur intérieure d'environ 30 mm.

8. Outil selon la revendication 2, caractérisé en ce que le levier d'écartement (18) est réalisé comme pivot rond ou profilé, le cas échéant creux en section transversale.

9. Outil selon la revendication 2, caractérisé en ce que le levier d'écartement (18) est un prolongement de la tige (17), coudé selon un angle obtus, par rapport à la tige (17) en matériau plein, d'une section transversale extérieure ronde, ovale ou profilée, le cas échéant en forme de bande.

10. Outil selon la revendication 2, caractérisé en ce que la saillie transversale (V) est une goupille (23) traversant le levier d'écartement (18), dépassant des deux extrémités, avec un plus petit diamètre (d) que le diamètre extérieur du levier d'écartement (18).

11. Outil selon la revendication 10, caractérisé en ce que la goupille (23) est insérée à peu près perpendiculairement au plan dans le levier d'écartement (18) qui est défini par la tige (17) et le levier d'écartement coudé (18).

12. Outil selon les revendications 10 et 11, caractérisé en ce que le levier d'écartement (18) possède un diamètre extérieur d'environ 14 mm et une longueur d'environ 47 mm, et en ce que la goupille (22) d'un diamètre d'environ 6 mm est disposée selon un écart d'environ 33 mm de l'extrémité libre (19) et dépasse des deux côtés selon environ 5 mm du levier d'écartement (18).
